# EUROPEAN PATENT SPECIFICATION

(11) **EP 3 292 901 B1**
(45) Date of publication and mention of the grant of the patent: **27.05.2020**
(21) Application number: 16187604.0
(22) Date of filing: 07.09.2016
(51) Int. Cl.: B01D 35/16, B01D 36/00, F02M 37/22, F16K 24/04

(54) **DRAINAGE SYSTEM FOR A FLUID FILTER**
ABFLUSSSYSTEM FÜR EINEN FLUIDFILTER
SYSTÈME DE DRAINAGE POUR UN FILTRE DE FLUIDE

(43) Date of publication of application: 14.03.2018
(73) Proprietor: MANN + HUMMEL GMBH, 71636 Ludwigsburg (DE)
(72) Inventor: Sýkora, Bohumír, 59214 Nove Veseli (CZ)
(74) Representative: Seyboth, Matthias

(56) References cited:
- US-A1- 2006 086 922
- US-A1- 2008 060 992
- US-A1- 2013 298 509
- US-A1- 2014 202 947
- US-A1- 2016 079 740
- US-B1- 6 258 269

## Description

### Technical Field

The invention relates to a drainage system for draining a fluid from a fluid filter, in particular for a water trap of a fuel filter or for draining oil from an oil filter. The drainage system comprises a filter housing element having a drain hole for fluidly connecting an inside of the filter housing with an outside of the filter housing. There is a drain plug provided having a longitudinal axis and a sealing ring which is seated on the drain plug for a fluid-tight closure of the drain hole.

### Prior Art

In practice, fluid filters such as fuel or oil filters are often provided with a drainage system for evacuating a fluid from the inside of the filter housing during maintenance work. The fluid may, for instance, be water which has been separated from fuel or oil during passage of the filter and which has been collected in a water trap inside the filter housing. Alternatively, the drainage system may serve to drain the fluid, for instance fuel or oil, to be filtered by the filter during normal use when replacing a filter element seated inside the filter housing. However, in the drainage systems available today, the drain plug either needs to be fully removed from the filter housing or needs to be equipped with two distinct sealing rings to simultaneously provide both a ventilation and a drainage function. In the first case, removal of the drain plug often results in that the fluid is drained, due to gravity, with a flush and which may lead to a rather uncontrolled spilling of the environment and a user's hand as well. In the latter case, manufacturing costs and the frequency of malfunction of the drainage system and are high. Examples of drainage systems can be found in US 2006/086922 A1, US 2013/298509 A1, US 6 258 269 B1, US 2014/202947 A1, US 2016/079740 A1 and US 2008/060992 A1.

It is, therefore, the object of the invention to provide an improved drainage system for a fluid filter which allows for both an improved handling and a more controlled drainage of a fluid such as water, fuel or oil and which can be produced at a low cost.

The object of the invention is solved by a drainage system according to claim 1. Further preferred embodiments of the invention are disclosed in the description and the claims.

The drainage system according to the invention comprises a filter housing element with a drain hole for fluidly connecting an inside of the filter housing element with an outside of the filter housing element. There is a drain plug provided having a longitudinal axis and a sealing ring which is seated on the drain plug for a fluid-tight closure of the drain hole. The drain plug has a drain channel for the fluid to be drained from the inside of the housing element, the drain channel having an inlet opening located at a lateral side of the drain plug and an outlet opening located at a first (lower) end of the drain plug. Further, there is a ventilation channel provided in the drain plug having a first orifice located at the first end of the drain plug and having a second orifice which is located at the other end of the drain plug or, in an axial direction, in between the inlet opening of the drain channel and the said second end of the drain plug, in particular on a lateral side of the drain plug. The sealing ring sealingly abuts against the filter housing in an axial and a radial direction when the drain plug is positioned in its closing position. Upon an axial movement of the drain plug from the said closing position into a drainage position, a radially inward edge portion of the sealing ring which is sealingly encompassing the drain plug is dislodged from its axially sealing abutment against the filter housing by the drain plug while a sealing abutment of an radially outer edge portion of the sealing ring against the housing element is maintained such that the drain hole is fluidly connected both to the entrance opening of the drain channel and the orifice of the ventilation channel. The drainage system according to the invention has very few parts and is, therefore, easy and cost-efficient to manufacture. The single sealing ring has a double sealing function. Firstly, it allows for a reliably sealing-off of the drainage hole during normal use of a filter equipped with said drainage system. Secondly, during drainage of a fluid located inside the filter housing element, the sealing ring allows to seal off the drainage plug with respect to the housing such that the fluid can only be drained from the inside of the filter housing element across the drain channel provided in the drain plug. The risk of an uncontrolled spilling and contamination of the surrounding as well as a user's hands can thereby be greatly reduced. Further, due to the separate ventilation channel provided in the drain plug, a steady ventilation of the interior side of the filter housing element for pressure compensation and thus a steady flow off of the fluid via the drain channel can be realized.

For a secure fit of the sealing ring on the drain plug, there may be provided a radial groove thereon in which the sealing ring is seated. Further, the sealing ring may be seated on the drain plug in a radially pre-stressed manner and/or in an axial press fit. In both cases, a reliable sealing of the plug can be realized.

According to a preferred embodiment of the invention, the sealing ring is a (simple) flat seal ring that is a plano-parallel sealing disc. Such sealing rings are readily available on the market in a wide range of sizes and which are, therefore, quite inexpensive to obtain.

It is to be understood, however, that the sealing ring, according to the invention, may alternatively have one or more convex or concave-shaped surfaces to adapt the sealing ring to the corresponding sealing surfaces of the sealing system.

The sealing ring according to the invention, preferably consists of an elastomeric material. Suitable materials are, for instance PUR (Polyurethane), EPDM rubber (ethylene propylene diene monomer rubber) or the like. Other suitable materials can be easily conceived by a person skilled in the art.

The sealing ring, according to the invention, is configured and designed such that it basically functions as a bistable spring element which, when the drain plug is moved in an axial direction from its closing position to its draining position, is forced by bulging from a first stable spatial (sealing) conformation to a second stable drainage or draining conformation and vice versa. Thereby, the sealing ring actually directly supports its alteration of shape which is necessary for its valve-like function.

According to a further embodiment of the invention, the drain plug is configured as a drain screw which is in a thread engagement with the filter housing element. Such a drain screw allows for an easy axial pretensioning of the sealing ring against the filter housing element for securely sealing off the drain hole.

According to an alternative embodiment of the invention, the drain plug is secured to the filter housing by a detachable bayonet connection or lock. Such a bayonet lock is also cost-efficient to manufacture and likewise allows for an aforesaid pretensioning of the sealing ring in the closed position of the sealing plug.

For a sufficient air flow into the filter housing element during drainage of fluid therefrom, the drain plug may be provided with an axial groove on its lateral side. In case that there is an external thread provided on the drain plug, the external thread is actually split by the axial groove. The air thus needs not flow along the outer thread of the drain plug, which may easily become plugged by dirt or the like.

The drain plug is preferably provided with a drive profile, in particular an external hex, for a turning tool. Operation of the draining plug can thereby be greatly facilitated.

The filter housing, according to the invention, preferably has a blind hole at its lower end into which the drain plug extends. In this case, the side walls of the blind hole can be provided, in particular, with an internal thread or a bayonet slot for engagement of the drain plug.

According to a further embodiment of the invention, the drain plug has a circumferential collar or flange which extends from the drain plug in a radial direction. The said flange serves for abutment and support of the sealing ring when the drain plug is in its closing position.

According to the invention, said drain hole preferably partially encompasses said blind hole of the filter housing. This allows for a quick and reliable draining of the fluid.

According to the invention, the filter housing element may be a filter bowl, a filter lid or filter cover, a filter body or a filter housing in general. This allows for a wide application range of the drainage system in fluid filters.

### BRIEF DESCRIPTION OF THE DRAWINGS

Various other features and attendant advantages of the present invention will be more fully appreciated as the same becomes better understood when considered in conjunction with the accompanying drawings, in which like reference numerals characterize the same or similar parts throughout the several views, and wherein:
- Fig. 1: shows a perspective view of a drainage systems with a filter housing part having a bottom drain hole and with a drain plug with a single sealing ring;
- Fig. 2: shows a sectional view of the drainage system according to Fig. 1 with the drain plug positioned in its closing position;
- Fig. 3: shows a sectional view of the drainage system according to Fig. 1 with the drain plug positioned in its drainage position;
- Fig. 4: shows the drainage system according to Fig. 1 during an early mounting stage of the drain plug and the sealing ring on the filter housing element;
- Fig. 5: shows the drainage system according to Fig. 1 at a late stage during mounting of the drain plug and the sealing ring on the filter housing element;
- Fig. 6: shows a detailed perspective view of the drain plug of the drainage system of Fig. 1; and
- Fig. 7: shows an alternative embodiment of the drainage system with the drain plug and the filter housing element being connected to one another by a bayonet lock.

### DETAILED DESCRIPTION OF THE DRAWINGS

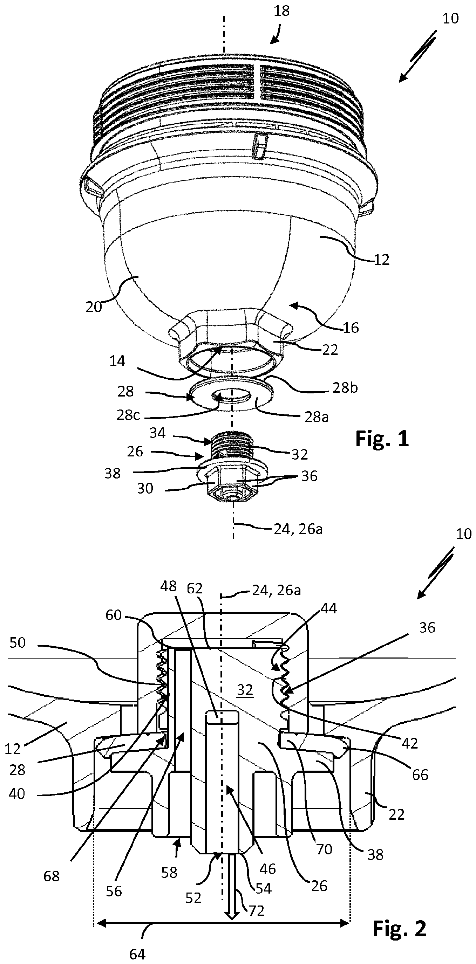

**FIG. 1** shows a perspective view of a drainage system **10** for a fluid, in particular for draining water from a water trap of an oil or fuel filter.

The drainage system 10 comprises a filter housing element **12**, which may, for instance be formed as a housing bowl or housing lid of a filter housing for e.g. mounting a filter element therein (not shown). The housing element 12 is provided with a drain hole **14** at its lower end **16** which serves to connect an inside **18** of the filter housing element 12 with an outside **20** of the filter housing element 12. There is a spout or collar **22** provided on the lower end 16 of the housing element 12. The collar 22 may project from the lower end 16 of the housing element 12 in an axial direction with respect to the longitudinal axis **24** thereof. The collar 22 may, alternatively, also obliquely, in particular, orthogonally, project from the housing element 12 with respect to said longitudinal axis 24 thereof.

The drainage system further comprises a drain plug **26** and a sealing ring **28** for a fluid-tight closure of the drain hole 14.

The drain plug 26 extends along an longitudinal axis **26a** and may be formed as a drain screw with a head portion **30** and a shaft **32** extending away from the head portion 30 in in axial direction. The shaft 32 is provided with an outside thread **34** for a thread engagement with the filter housing element 12. The drain plug 26 preferably has a drive **36**, such as, for instance, an external hex, for a corresponding turning tool so that the drain plug 26 may be easily screwed into and unscrewed from the housing element 12. There is a circumferential flange **38** formed on the drain plug 26. The flange projects from the drain plug 26 in a radial direction to form a support for the sealing ring 28.

The sealing ring 28, according to FIG. 1, may be formed as a simple flat sealing ring, which is basically a sealing disc with plano-parallel surfaces **28a**, **28b** and a central hole **28c**. The sealing ring preferably consists of an elastomeric material. Suitable materials are, for instance, polyurethane (PUR), an EPDM (ethylene propylene diene monomer rubber) or the like.

**FIG. 2** shows a partial sectional view of the drainage system 10 which will be explained in further detail below. The drain screw or plug 26 is shown in its closing position and extends into a blind hole **40** of the housing element 12. The blind hole 40 is limited in a radial direction by a side wall **42** which is provided with an internal thread **44**. The drain plug 26 engages said internal thread 44 of the side wall 42 with its external thread 34. The drain hole 14 partially encompasses said blind hole 40 of the housing element 12 in a ringlike fashion.

The drain plug 26 is provided with two independent flow channels. There is a fluid drain channel **46** which extends through the drain plug 26. The fluid drain channel 46 has a radial inlet opening **48** which located at a lateral side **50** of the drain plug 26 and an outlet opening **52** which is located at a first (lower) end **54** of the drain plug 26.

The drain plug 26 further comprises a ventilation channel **56** for entraining (ambient) air to the inside of the filter housing element 12 during drainage of a fluid. By this, a pressure equalization can be reliably achieved between the inside and the outside of the filter housing element 12 The ventilation channel 56 has a first orifice **58** located at the first end 54 of the drain plug 26 and a second orifice **60** which is located at the second or upper end **62** of the drain plug 26 on the lateral side of the drain plug 26.

According to an alternative embodiment of the invention, the second orifice 60 may also be located in an axial direction in between the inlet opening 48 of the drain channel 46 and the said second end 62 of the drain plug 26.

As can be seen from Fig. 2, the sealing ring 28 is pressed against the filter housing element 12 in an axial direction. Due to the fact, that the sealing ring 28 is oversized with respect to an internal diameter **64** of the collar 22 of the housing element the sealing ring 28, with a radially outer edge portion **66**, additionally sealingly abuts against the filter housing element 12 in a radial direction when the drain plug 26 is positioned in its closing position.

The lower surface 28b of the sealing ring directly abuts against the flange of the drain plug. The drain plug 26 is provided with a radial groove **68** which serves to hold the sealing ring 28. The sealing ring 28, in other words, is seated on the drain plug 26 and projects into the radial groove 68 with a radially interior edge portion **70**. The sealing ring 28 may further abut against the lateral side 50 of the drain plug 26 in a sealing fashion.
Of note, the radial groove 68 may provide some axial play for the sealing ring to allow for a so-called axial breathing of the sealing ring 28. Alternatively, the sealing ring may be disposed within the radial groove in an axial press fit.

The flange 38 of the drain plug 26 is smaller than the internal diameter 64 of the collar 22 to allow for an unhindered axial movement of the drain plug 26 relative to the housing element 12 during operation thereof.

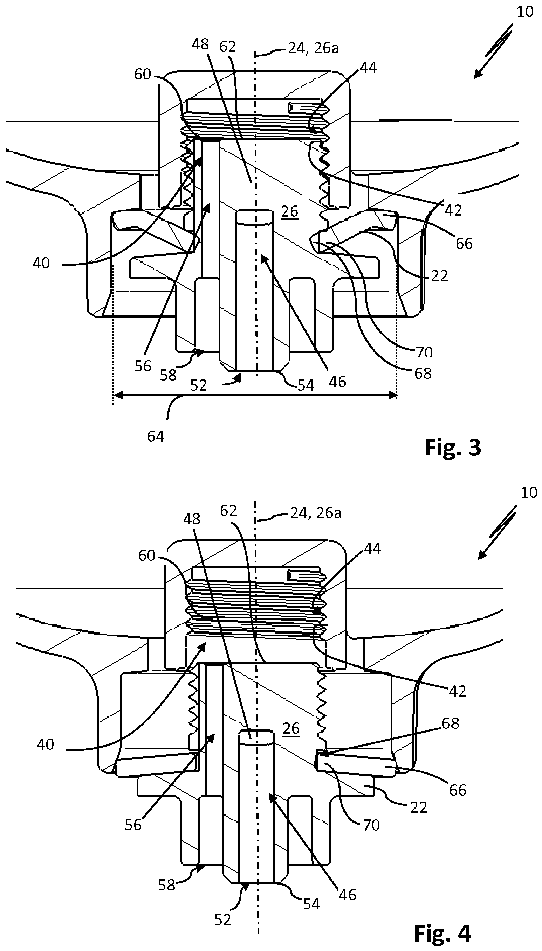

For a fluid drainage from the inside of the filter housing element 12 the drain plug 26 is unscrewed from the filter housing element 12 such that it is moved in an axial direction towards the outside. Upon this axial movement **72** of the drain plug 26 from the said closing position shown in Figure 2 into its drainage position shown in **FIG. 3**, (only) the radially interior edge portion 70 of the sealing ring 28 is dislodged from its axial sealing abutment against the filter housing 12 by the drain plug 26. This results in a fluidic connection of the drain hole 14 with both the inlet opening 48 of the drain channel 46 and the second orifice 60 of the ventilation channel 56.

Of note, the radially outer edge portion 66 of the sealing ring 28 remains in an axially sealing contact with the housing element 12. Additionally, the sealing ring 28 remains in a radially sealing contact with the inside of the collar 22 of the housing element 12 due to its radial oversize. Also, the interior edge section of the sealing ring 28 remains in an axially and/or radially sealing contact with the drain plug. Thereby, an undesirable spilling of fluid from the inside 18 of the housing element 12 along the lateral side of the drain plug 26 or the collar 22 can be prevented.

The sealing ring 28 is configured and designed such that it basically functions as a bistable spring element which, when the drain plug is moved in an axial direction from its closing position to its draining position, is forced by bulging from a first stable spatial conformation (c.f. FIG. 2) to a second stable conformation shown in FIG. 3 and vice versa.

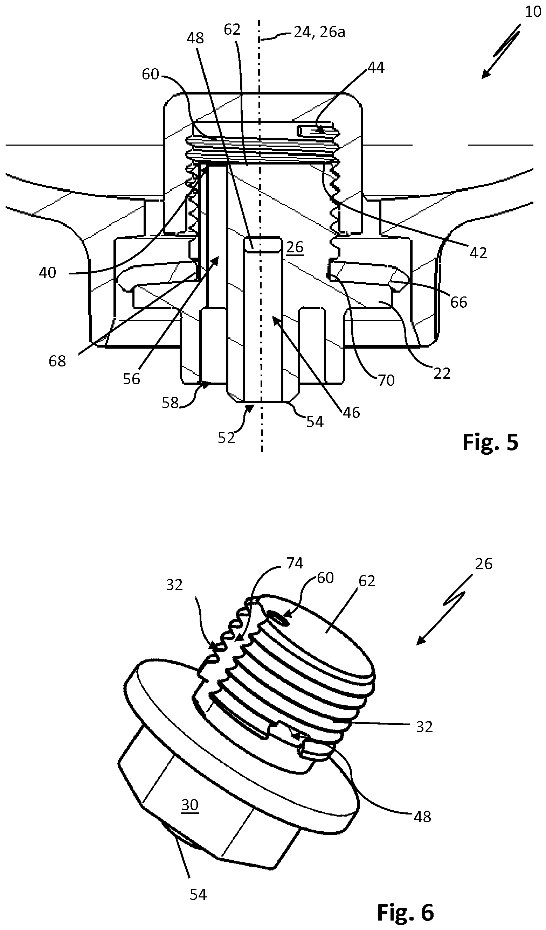

In **FIG. 4**, the drainage system 10 is shown when mounting the drain plug 26 on the filter housing element 12 at an early mounting stage. The radially oversized sealing ring 28 just abuts against the housing collar 22. When further inserting the drain plug 26 in an axial direction into the blind hole 40 of the housing element 12, the radial outer edge portion 66 of the sealing ring 28 is deflected in an axial direction with respect to the radial inner edge portion 70 of the sealing ring 28 as is shown in **FIG. 5**. When the drain plug 26 is fully screwed into the filter housing element 12, the sealing ring 28 is then seated in its sealing position shown in FIG. 2.

**FIG. 6** shows a detailed perspective view of the drain plug 26 of the drainage system 10 according to FIGS. 1 to 5. The lateral inlet opening 48 of the drain channel 46, in an axial direction, is spaced less from the flange 38 than the second orifice 60 of the ventilation channel. Further, there is an axial groove **74** disposed on the lateral side of the drain plug 26 which serves to fluidly connect the ventilation channel 56 with the drain hole 14 of the housing element when the drain plug 26 is positioned in its opening (drainage) position relative to the housing element (FIG. 3). The axial groove ensures a sufficient entrainment of air into the filter housing element 12 when the drain plug 26 and the housing element 12 are in a thread engagement. The function of the outer thread of the drain plug 26, however, is not compromised by such an axial (ventilation) groove.

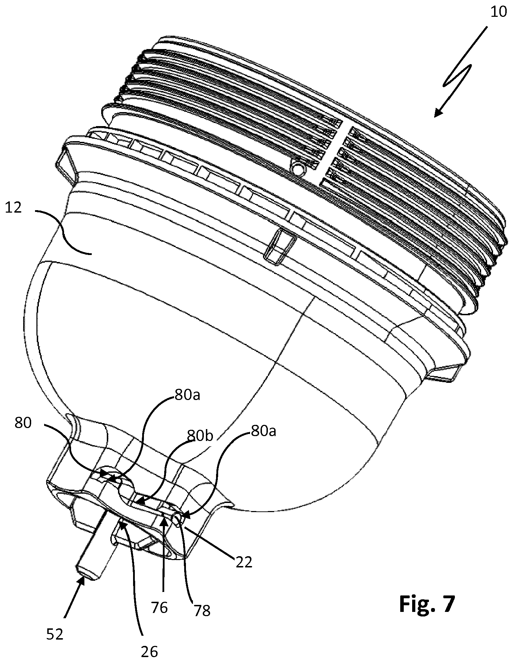

According to an alternative embodiment of the invention shown in **FIG. 7** the drain plug 26 and the filter housing element 12 may form a bayonet lock or bayonet connection **76.** For this, the drain plug 26- as a male part - shows two or more pins **78** which are projecting from the drain plug 26 in a radial direction to the outside. The housing collar 22 of the filter housing part as a female receptor has matching slots **80** for the pins 78 to keep the two parts locked together. Each slot 80, in the circumferential direction, shows two or three axially offset sections 80a, 80b which correspond to the closing or draining position of the drain plug 26, respectively. Of note, the bayonet connection 76 does not necessarily need to alow for detachment of the drain plug 26 from the housing element 12.

The drain plug 26 and/or the filter housing element 12 of the drainage systems 10 described above may be made of metal or plastic material which may be fiber reinforced if needed.

## Claims

1. Drainage system (10) for draining a fluid from a fluid filter, in particular for a water trap of a fuel or for an oil filter, comprising:
- a filter housing element (12) with a drain hole (14) for fluidly connecting an inside (18) of the housing element (12) with an outside (20) of the housing element (12);
- a drain plug (26) having a longitudinal axis (26a);
- a sealing ring (28) seated on the drain plug (26) for a fluid-tight closure of the drain hole (14);
- a drain channel (46) provided in the drain plug (26) for the fluid, the drain channel (46) having a radial inlet opening (48) and an outlet opening (52) located at a first end (54) of the drain plug (26);
- a ventilation channel (56) provided in the drain plug (26) having a first orifice (58) located at the first end (54) of the drain plug (26) and having a second orifice (60) which is located at the other end (62) of the drain plug (26) or, in an axial direction, in between the inlet opening (48) of the drain channel (46) and the said second end (62) of the drain plug (26);
wherein the sealing ring (28) sealingly abuts against the housing element (12) in an axial and a radial direction when the drain plug (26) is positioned in its closing position; and wherein, upon an axial movement of the drain plug (26) from the said closing position into a drainage position, a radially inward edge portion (70) of the sealing ring (28) is dislodged from its axially sealing abutment against the filter housing element (12) by the drain plug (26) while a sealing abutment of an outer edge portion (66) of the sealing ring (28) against the housing element (12) and a sealing abutment of the radially inward edge portion (70) of the sealing ring (28) against the drain plug (26) is maintained such that the drain hole (14) is fluidly connected both to the inlet opening (48) of the drain channel (46) and the second orifice (60) of the ventilation channel (56), **characterized in that** the sealing ring (28) is configured and designed such that it functions as a bistable spring element which, when the drain plug (26) is moved in an axial direction from its closing position to its drainage position, is forced by bulging from a first stable conformation for sealing to a second stable conformation for drainage.

2. The drainage system according to claim 1, **characterized in that** the sealing ring (28) is a flat sealing ring.

3. The drainage system according to claim 1 or 2, **characterized in that** the sealing ring (28) consists of an elastomeric material.

4. The drainage system according to any of the preceding claims, **characterized in that** the drain plug (26) has an outer radial groove (68) in which the sealing ring (28) is seated, preferably in an axial press fitted manner.

5. The drainage system according to any of the preceding claims, **characterized in that** the drain plug (26) is configured as a drain screw which is in thread engagement with the housing element (12).

6. The drainage system according to any of the preceding claims 1 to 4, **characterized in that** the drain plug (26) is connected to the filter housing element (12) by a bayonet connection (76).

7. The drainage system according to any of the preceding claims, **characterized in that** the drain plug (26), on its lateral side (50), is provided with an axial groove (74).

8. The drainage system according to any of the preceding claims, **characterized in that** the filter housing element (12) has a blind hole (40) at its lower end into which the drain plug extends.

9. The drainage system according to any of the preceding claims, **characterized in that** the drain plug (26) has a circumferential flange (38) which extends from the drain plug (26) in a radial direction and by which the sealing ring (28) is pressed against the housing element (12) when the drain plug (26) is in its closing position.

10. The drainage system according to any of the preceding claims, **characterized in that** the drain hole partially encompasses said blind hole (40) of the housing element (12).

11. The drainage system according to any of the preceding claims, **characterized in that** the housing element (12) is a filter bowl or a filter lid.

12. The drainage system according to any of the preceding claims, **characterized in that** the drain plug (26) has a drive profile (36), in particular an external hex.

## Patentansprüche

1. Entleerungssystem (10) zum Ablassen eines Fluids aus einem Fluidfilter, insbesondere für einen Wasserabscheider eines Kraftstoffs oder für einen Ölfilter, umfassend:
- ein Filtergehäuseelement (12) mit einer Ablauföffnung (14) zur Fluidverbindung einer Innenseite (18) des Gehäuseelements (12) mit einer Außenseite (20) des Gehäuseelements (12);
- ein Ablassstopfen (26) mit einer Längsachse (26a);
- einen auf dem Ablassstopfen (26) sitzenden Dichtungsring (28) zum fluiddichten Verschluss der Ablauföffnung (14);
- einen Ablaufkanal (46), der in dem Ablassstopfen (26) für das Fluid vorgesehen ist, wobei der Ablaufkanal (46) eine radiale Einlassöffnung (48) und eine Auslassöffnung (52) hat, die sich an einem ersten Ende (54) des Ablassstopfens (26) befindet;
- einen in dem Ablassstopfen (26) vorgesehenen Belüftungskanal (56), der eine erste Öffnung (58) hat, die sich am ersten Ende (54) des Ablassstopfens (26) befindet, und eine zweite Öffnung (60) hat, die sich am anderen Ende (62) des Ablassstopfens (26) oder, in axialer Richtung, zwischen der Einlassöffnung (48) des Ablaufkanals (46) und dem zweiten Ende (62) des Ablassstopfens (26) befindet;
wobei der Dichtungsring (28) in axialer und radialer Richtung dichtend an dem Gehäuseelement (12) anliegt, wenn der Ablassstopfen (26) in seiner Schließposition positioniert ist; und wobei, bei einer axialen Bewegung des Ablassstopfens (26) aus der Schließstellung in eine Entleerungsstellung, ein radial innerer Randabschnitt (70) des Dichtungsrings (28) durch den Ablassstopfen (26) aus seiner axial dichtenden Anlage an dem Filtergehäuseelement (12) gelöst wird, während eine dichtende Anlage eines äußeren Randabschnitts (66) des Dichtungsrings (28) an dem Gehäuseelement (12) und eine dichtende Anlage des radial inneren Randabschnitts (70) des Dichtungsrings (28) gegen den Ablassstopfen (26) so aufrechterhalten wird, dass die Ablauföffnung (14) sowohl mit der Einlassöffnung (48) des Ablaufkanals (46) als auch mit der zweiten Öffnung (60) des Belüftungskanals (56) fluidisch verbunden ist, **dadurch gekennzeichnet, dass** der Dichtungsring (28) derart konfiguriert und ausgelegt ist, dass er als bistabiles Federelement wirkt, das bei einer Bewegung des Ablassstopfens (26) in axialer Richtung aus seiner Schließstellung in seine Entleerungsstellung durch Aufwölben von einer ersten stabilen Formgebung zur Abdichtung in eine zweite stabile Formgebung zur Entleerung gezwungen wird.

2. Entleerungssystem nach Anspruch 1, **dadurch gekennzeichnet, dass** der Dichtungsring (28) ein Flachdichtungsring ist.

3. Entleerungssystem nach Anspruch 1 oder 2, **dadurch gekennzeichnet, dass** der Dichtungsring (28) aus einem elastomeren Material besteht.

4. Entleerungssystem nach einem der obigen Ansprüche, **dadurch gekennzeichnet, dass** der Ablassstopfen (26) eine äußere radiale Nut (68) hat, in welcher der Dichtungsring (28) vorzugsweise in axialer Presspassung sitzt.

5. Entleerungssystem nach einem der obigen Ansprüche, **dadurch gekennzeichnet, dass** der Ablassstopfen (26) als Ablassschraube ausgebildet ist, die in Gewindeeingriff mit dem Gehäuseelement (12) steht.

6. Entleerungssystem nach Anspruch 1 bis 4, **dadurch gekennzeichnet, dass** der Ablassstopfen (26) mit dem Filtergehäuseelement (12) durch eine Bajonettverbindung (76) verbunden ist.

7. Entleerungssystem nach einem der obigen Ansprüche, **dadurch gekennzeichnet, dass** der Ablassstopfen (26) auf seiner lateralen Seite (50) mit einer axialen Nut (74) versehen ist.

8. Entleerungssystem nach einem der obigen Ansprüche, **dadurch gekennzeichnet, dass** das Filtergehäuseelement (12) an seinem unteren Ende ein Sackloch (40) aufweist, in das der Ablassstopfen hineinragt.

9. Entleerungssystem nach einem der obigen Ansprüche, **dadurch gekennzeichnet, dass** der Ablassstopfen (26) einen Umfangsflansch (38) hat, der sich von dem Ablassstopfen (26) in radialer Richtung erstreckt und durch den der Dichtungsring (28) gegen das Gehäuseelement (12) gedrückt wird, wenn sich der Ablassstopfen (26) in seiner Schließstellung befindet.

10. Entleerungssystem nach einem der obigen Ansprüche, **dadurch gekennzeichnet, dass** das Ablauföffnung das Sackloch (40) des Gehäuseelements (12) teilweise umfasst.

11. Entleerungssystem nach einem der obigen Ansprüche, **dadurch gekennzeichnet, dass** das Gehäuseelement (12) ein Filtertopf oder ein Filterdeckel ist.

12. Entleerungssystem nach einem der obigen Ansprüche, **dadurch gekennzeichnet, dass** der Ablassstopfen (26) ein Antriebsprofil (36), insbesondere einen Außensechskant, hat.

## Revendications

1. Système de vidange (10) pour drainer un fluide d'un filtre à fluide, notamment pour un séparateur d'eau d'un carburant ou pour un filtre à huile, comprenant :
- un élément de boîtier de filtre (12) avec un trou de vidange (14) pour raccordé fluidiquement un côté intérieur (18) de l'élément de boîtier (12) avec un côté extérieur (20) de l'élément de boîtier (12) ;
- un bouchon de vidange (26) ayant un axe longitudinal (26a) ;
- une bague d'étanchéité (28) placée sur le bouchon de vidange (26) pour une fermeture étanche aux fluides du trou de vidange (14) ;
- un canal de vidange (46) prévu dans le bouchon de vidange (26) pour le fluide, le canal de vidange (46) ayant une ouverture d'entrée radiale (48) et une ouverture de sortie (52) située à une première extrémité (54) du bouchon de vidange (26) ;
- un conduit d'aération (56) prévu dans le bouchon de vidange (26) ayant un premier orifice (58) situé à la première extrémité (54) du bouchon de vidange (26) et ayant un second orifice (60) situé à l'autre extrémité (62) du bouchon de vidange (26) ou, dans une direction axiale, entre l'ouverture d'entrée (48) du canal de vidange (46) et ladite seconde extrémité (62) du bouchon de vidange (26) ;
dans lequel la bague d'étanchéité (28) est en contact étanche avec l'élément de boîtier (12) dans une direction axiale et radiale lorsque le bouchon de vidange (26) est positionné dans sa position de fermeture ; et dans lequel, lors d'un mouvement axial du bouchon de vidange (26) de ladite position de fermeture à une position de vidange, un tronçon de bord radialement intérieur (70) de la bague d'étanchéité (28) est délogée de sa butée d'étanchéité axiale contre l'élément de boîtier de filtre (12) par le bouchon de vidange (26), tandis qu'une butée d'étanchéité d'une partie de bord extérieure (66) de la bague d'étanchéité (28) contre l'élément de boîtier (12) et la butée d'étanchéité de la partie de bord (70) radialement intérieure de la bague d'étanchéité (28) contre le bouchon de vidange (26) est maintenue de telle sorte que le trou de vidange (14) est en liaison fluidique à la fois avec l'ouverture d'entrée (48) du canal de vidange (46) et le second orifice (60) du conduit d'aération (56), **caractérisé en ce que** la bague d'étanchéité (28) est configurée et conçue de telle sorte qu'elle fonctionne comme un élément de ressort bistable qui, lorsque le bouchon de vidange (26) est déplacé dans une direction axiale de sa position de fermeture à sa position de vidange, est forcé par le bombement d'une première configuration stable pour l'étanchéité à une seconde configuration stable pour le vidange.

2. Système de vidange selon la revendication 1, **caractérisé en ce que** la bague d'étanchéité (28) est une bague d'étanchéité plate.

3. Système de vidange selon la revendication 1 ou 2, **caractérisé en ce que** la bague d'étanchéité (28) est constituée d'un matériau élastomère.

4. Système de vidange selon l'une des revendications précédentes, **caractérisé en ce que** le bouchon de vidange (26) présente une rainure radiale extérieure (68) dans laquelle est logée la bague d'étanchéité (28), de préférence de manière axialement ajustée par pression.

5. Système de vidange selon l'une des revendications précédentes, **caractérisé en ce que** le bouchon de vidange (26) est configuré en tant que vis de vidange qui est en engagement filetée avec l'élément de boîtier (12).

6. Système de vidange selon l'une des revendications précédentes 1 à 4, **caractérisé en ce que** le bouchon de vidange (26) est relié à l'élément de boîtier de filtre (12) par un raccord à baïonnette (76).

7. Système de vidange selon l'une des revendications précédentes, **caractérisé en ce que** le bouchon de vidange (26) est pourvu d'une rainure axiale (74) sur sa face latérale (50).

8. Système de vidange selon l'une des revendications précédentes, **caractérisé en ce que** l'élément de boîtier de filtre (12) présente un trou borgne (40) à son extrémité inférieure dans lequel s'étend le bouchon de vidange.

9. Système de vidange selon l'une des revendications précédentes, **caractérisé en ce que** le bouchon de vidange (26) présente une bride périphérique (38) qui s'étend depuis le bouchon de vidange (26) dans une direction radiale et par laquelle la bague d'étanchéité (28) est pressée contre l'élément de boîtier (12) lorsque le bouchon de vidange (26) est dans sa position de fermeture.

10. Système de vidange selon l'une des revendications précédentes, **caractérisé en ce que** le trou de vidange englobe partiellement ledit trou borgne (40) de l'élément de boîtier (12).

11. Système de vidange selon l'une des revendications précédentes, **caractérisé en ce que** l'élément de boîtier (12) est une cuve de filtre ou un couvercle à filtre.

12. Système de vidange selon l'une des revendications précédentes, **caractérisé en ce que** le bouchon de vidange (26) présente un profil d'entraînement (36), notamment un hexagone extérieur.
